(19) Europäisches Patentamt / European Patent Office / Office européen des brevets

(11) **EP 4 536 525 B1**

(12) **EUROPEAN PATENT SPECIFICATION**

(45) Date of publication and mention
of the grant of the patent:
**06.05.2026 Bulletin 2026/19**

(21) Application number: **22818383.6**

(22) Date of filing: **17.11.2022**

(51) International Patent Classification (IPC):
**B60W 10/26** *(2006.01)*     **B60W 30/02** *(2012.01)*
**B60W 30/188** *(2012.01)*     **B60L 15/38** *(2006.01)*

(52) Cooperative Patent Classification (CPC):
**B60W 10/08; B60L 15/2036; B60L 15/38;**
**B60T 7/20; B60T 8/1708; B60W 10/184;**
**B60W 10/20; B60W 10/26; B60W 30/02;**
**B60W 30/188; B60W 50/06; B62D 53/005;**
B60L 2200/36; B60L 2260/44; B60W 2050/0006;
                                           (Cont.)

(86) International application number:
**PCT/EP2022/082338**

(87) International publication number:
**WO 2023/237221 (14.12.2023 Gazette 2023/50)**

(54) **METHOD OF CONTROL ALLOCATION FOR MULTI-UNIT VEHICLE COMBINATIONS**

VERFAHREN ZUR STEUERUNGSZUWEISUNG FÜR MEHREINHEITEN-FAHRZEUGKOMBINATIONEN

PROCÉDÉ D'ATTRIBUTION DE COMMANDE DESTINÉ À DES COMBINAISONS DE VÉHICULES À PLUSIEURS UNITÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.06.2022 PCT/EP2022/065415**

(43) Date of publication of application:
**16.04.2025 Bulletin 2025/16**

(73) Proprietor: **VOLVO TRUCK CORPORATION**
**405 08 Göteborg (SE)**

(72) Inventors:
• **SADEGHI KATI, Maliheh**
**433 46 PARTILLE (SE)**
• **GELSO, Esteban**
**421 51 VÄSTRA FRÖLUNDA (SE)**
• **LAINE, Leo**
**438 94 HÄRRYDA (SE)**

(74) Representative: **Ström & Gulliksson AB**
**P.O. Box 4188**
**203 13 Malmö (SE)**

(56) References cited:
**WO-A1-2022/106005**     **US-A1- 2018 304 944**
**US-A1- 2022 097 786**

• **TAGESSON K ET AL: "Real-time performance of control allocation for actuator coordination in heavy vehicles", INTELLIGENT VEHICLES SYMPOSIUM, 2009 IEEE, IEEE, PISCATAWAY, NJ, USA, 3 June 2009 (2009-06-03), pages 685 - 690, XP031489922, ISBN: 978-1-4244-3503-6**

(52) Cooperative Patent Classification (CPC): (Cont.)
B60W 2050/0031; B60W 2300/14; B60W 2510/244;
B60W 2710/083; B60W 2710/207; B60W 2720/10;
B60W 2720/106; B60W 2720/12; B60W 2720/14;
B60Y 2200/147

## EP 4 536 525 B1

**Description**

### TECHNICAL FIELD

The invention relates generally to control allocation for a vehicle combination. In particular aspects, the invention relates to a system and method for determining a control input for one or more units of a vehicle combination having multiple units. The invention can be applied in heavy-duty vehicles, such as trucks, buses, and construction equipment. In particular, the invention can be applied in multi-unit vehicle combinations with distributed propulsion and energy storage. Although the invention may be described with respect to a particular vehicle, the invention is not restricted to any particular vehicle.

### BACKGROUND

In traditional vehicle combinations, for example semi-trailers, a tractor unit may provide propulsion for the entire combination, while trailer units are towed behind. Traditional vehicle combinations may employ internal combustion engines in a tractor unit to provide propulsion. In battery electric vehicle combinations, batteries may be installed in the tractor unit to power electric motors and provide propulsion. If batteries are also installed in the trailer of a vehicle combination, electrical motors may also be installed so that the trailer can be used as a propulsive complement to the combination. This allows for the possibility of using an electric trailer on both tractors with internal combustion engines and on battery electric vehicle tractors. Furthermore, conventional heavy vehicle trailers are normally installed with pneumatic brakes to make the vehicle stop safely and in time. An electric trailer could also be used to recharge the batteries through regenerative braking, thus preventing wasting energy through the mechanical braking system.

As vehicle combinations become more and more complex, the increasing number of controllable degrees of freedom makes it challenging to control the vehicle combination as a whole. In particular, as the number of controllable degrees of freedom starts to exceed the number of desired forces and moments of the vehicle combination as a whole, the vehicle combination becomes over-actuated, and the problem of control becomes underdetermined. As a result, there can be multiple possible solutions for how to control the various actuators such that they together generate the desired overall forces and moments.

So-called control allocation is often used to address this problem, wherein a control allocator receives desired forces and moments for the vehicle combination as a whole (a so-called virtual control input), and attempts to solve an optimization problem in order to find an optimal solution for how the actuators should be controlled (a so-called true control input).

Conventional control allocators are often responsible for directly controlling the actuators in all vehicle units, and are often tailored specifically to a particular configuration of the vehicle combination due to the complexity of the problem they are supposed to solve. Solutions that approach the problem on a unit level do not take into account global factors for the vehicle combination.

It is therefore desired to develop a solution for control allocation for vehicle combinations that addresses or at least mitigates some of these issues.

US 2022/0097786 AI discloses a method for controlling, via a trailer vehicle configured to be coupled to a towing vehicle with an electric drive, the electric drive of the towing vehicle includes receiving, via a trailer brake control unit of the trailer vehicle, a current accelerator pedal position from the towing vehicle. The method further includes generating a control signal for the electric drive with the trailer brake control unit depending on the received current accelerator pedal position and controlling the electric drive with the generated control signal.

"Real-time Performance of Control Allocation for Actuator Coordination in Heavy Vehicles" by K Tagesson et al, Intelligent Vehicles Symposium, IEEE, Piscataway, NJ, USA, 3 June 2009, discloses a basic stability control system implementing a method in which the real-time performance of two different control allocation solvers is evaluated and the use of dynamic weighting is analysed.

WO 2022/106005 AI discloses method for reducing off-tracking by a multi-trailer heavy duty vehicle during a manoeuvre, the method comprising obtaining a model of vehicle dynamics describing dynamics of the multi-trailer heavy duty vehicle, determining respective force trajectories for two or more axles of the vehicle as a solution to a non-linear optimal control problem, and controlling motion of the heavy duty vehicle during the manoeuvre based on the determined force trajectories.

### SUMMARY

The invention attempts to solve the problems noted above by providing methods and systems for controlling multi-unit vehicle combinations with distributed propulsion and energy storage. In particular, a system is implemented which takes into account power management and generation of target motion parameters to determine a control allocation for individual units of the vehicle combination.

The disclosed methods and systems provide control allocation for vehicle combinations that is adaptable to different configurations of the vehicle combination. By taking a global approach to the vehicle combination, rather than, approaching the problem on a unit level, the control allocation can take into account global factors for the vehicle combination such as power allocation.

According to an aspect that is not claimed, there is provided a system for controlling a vehicle combination comprising a tractor unit and at least one trailing unit, the system comprising a target generator configured to determine a virtual control input for the vehicle combination based on a reference input for the vehicle combination, a power manager configured to determine a power allocation input for the vehicle combination based on the reference input and a power capability of one or more units of the vehicle combination, and a combination control allocator configured determine a control input for the vehicle combination based on the power allocation input and the virtual control input.

Optionally, the virtual combination control input comprises a set of desired motion parameters determined based the reference input. Optionally, the set of desired motion parameters of the virtual combination control input comprises at least one of a longitudinal force of the vehicle combination, a lateral force of the vehicle combination, a longitudinal coupling force between consecutive units, a lateral coupling force between consecutive units, and a yaw moment for one or more units.

Optionally, the target generator is configured to determine the virtual control input for the vehicle combination based on a motion capability of the vehicle combination.

Optionally, the target generator is configured to determine the virtual control input for the vehicle combination based on a vehicle model configured to model instabilities in vehicle motion.

Optionally, the reference input comprises at least one of a longitudinal acceleration, a longitudinal velocity of the tractor unit, a lateral velocity of the tractor unit, a yaw rate of at least one unit of the vehicle combination, and a steering angle of the tractor unit.

Optionally, the power capability of a unit is determined based on at least one of a state of charge, a state of health, a state of power, and a state of energy of a battery of the unit.

Optionally, the power allocation input comprises a set of desired motion parameters determined based on a power allocation for one or more units. Optionally, the set of desired motion parameters of the power allocation input comprises at least one of a desired electric machine force for one or more units and a desired electric service brake force for one or more units. Optionally, the power allocation for a unit is determined based on a power demand and at least one of a power loss associated with service brakes of the unit, a power loss associated with a battery of the unit, and a power loss associated with an electrical machine of the unit. Optionally, the power allocation for one or more unit is determined using an optimisation function to minimise the total power losses of the vehicle combination.

Optionally, the combination control allocator is configured determine a control input for the vehicle combination by determining a true combination control input based on the power allocation input and the virtual combination control input, and determine a unit-specific virtual control input based on the true combination control input. Optionally, the combination control allocator is configured determine the true combination control input by solving a weighted least squares optimization problem. Optionally, the system further comprises a plurality of unit control allocators, wherein each unit control allocator is configured to determine a unit-specific true control input for a respective unit of the vehicle combination based on the respective unit-specific virtual control input. Optionally, each unit control allocator is configured to determine the unit-specific true control input by solving a weighted least squares optimization problem.

According to an aspect of the invention, there is provided a computer-implemented method for controlling a vehicle combination comprising a tractor unit and at least one trailing unit, the method comprising determining a power allocation input for the vehicle combination based on a reference input for the vehicle combination and a power capability of one or more units of the vehicle combination such that the total power losses of the vehicle combination are below a threshold, determining a virtual control input for the vehicle combination based on the reference input, and determining a control input for the vehicle combination based on the power allocation input and the virtual control input.

Optionally, the virtual combination control input comprises a set of desired motion parameters determined based the reference input. Optionally, the set of desired motion parameters of the virtual combination control input comprises at least one of a longitudinal force of the vehicle combination, a lateral force of the vehicle combination, a longitudinal coupling force between consecutive units, a lateral coupling force between consecutive units, and a yaw moment for one or more units.

Optionally, the method comprises determining the virtual control input for the vehicle combination based on a motion capability of the vehicle combination.

Optionally, the method comprises determining the virtual control input for the vehicle combination based on a vehicle model configured to model instabilities in vehicle motion.

Optionally, the reference input comprises at least one of a longitudinal acceleration, a longitudinal velocity of the tractor unit, a lateral velocity of the tractor unit, a yaw rate of at least one unit of the vehicle combination, and a steering angle of the tractor unit.

Optionally, the power capability of a unit is determined based on at least one of a state of charge, a state of health, a state of power, and a state of energy of a battery of the unit.

Optionally, the power allocation input comprises a set of desired motion parameters determined based on a power allocation for one or more units. Optionally, the set of desired motion parameters of the power allocation input comprises at least one of a desired electric machine force for one or more units and a desired electric service brake force for one or more units. Optionally, method comprises determining the power allocation for a unit based on a power demand and at least one of a power loss associated with service brakes of the unit, a power loss associated with a battery of the unit, and a power loss associated with an electrical machine of the unit. Optionally, method comprises determining the power allocation for one or more units using an optimisation function to minimise the total power losses of the vehicle combination.

Optionally, method comprises determining a control input for the vehicle combination by determining a true combination control input based on the power allocation input and the virtual combination control input, and determining a unit-specific virtual control input on the true combination control input. Optionally, method comprises determining the true combination control input by solving a weighted least squares optimization problem. Optionally, method comprises determining a unit-specific true control input for a respective unit of the vehicle combination based on the unit-specific virtual control input. Optionally, method comprises determining the unit-specific true control input by solving a weighted least squares optimization problem.

According to another aspect that is not claimed, there is provided a computer program product comprising program code for performing, when executed by a processor device, the computer-implemented method.

According to another aspect that is not claimed, there is provided a control system comprising one or more control units configured to perform the computer-implemented method.

According to another aspect that is not claimed, there is provided a non-transitory computer-readable storage medium comprising instructions, which when executed by the processor device, cause a processor device to perform the computer-implemented method.

According to another aspect of the invention, there is provided a computer system comprising the features of claim 16.

According to another aspect of the invention, there is provided a vehicle comprising the features of claim 17.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above-discussed technical benefits.

## BRIEF DESCRIPTION OF THE DRAWINGS

With reference to the appended drawings, below follows a more detailed description of aspects of the disclosure cited as examples.

FIG. 1A shows a first example vehicle combination.
FIG. 1B shows a second example vehicle combination.
FIG. 2 schematically shows, in terms of functional blocks, an example control system for a vehicle combination.
FIG. 3 schematically shows an example vehicle combination including multiple vehicle units in accordance with the present disclosure
FIG. 4A is a flowchart of an example method for controlling a vehicle combination.
FIG. 4B is a flowchart of another example method for controlling a vehicle combination.
FIG. 5 schematically shows an example power flow model for a vehicle combination.
FIG. 6 is a schematic diagram of an exemplary computer system for implementing examples disclosed herein, according to one example.
FIG. 7 is a schematic drawing of a computer readable medium according to one example.
FIG. 8 is a schematic block diagram of a control unit according to one example.

Like reference numerals refer to like elements throughout the description.

## DETAILED DESCRIPTION

Aspects set forth below represent the necessary information to enable those skilled in the art to practice the disclosure.

In vehicle combinations having a plurality of units, for example a tractor unit and one or more trailer units, motion support devices such as electric motors and service brakes may be distributed across the various units in order to provide local propulsion to each unit. However, control systems for such vehicle combinations are often tailored to a particular configuration of the vehicle combination, and tend to approach the problem on a unit level. As such, these control systems are not adaptable and do not take into account global factors for the vehicle combination.

To remedy this, methods and systems are proposed for controlling multi-unit vehicle combinations with distributed propulsion and energy storage. A reference input is used to determine a desired power allocation and a virtual control input for the vehicle combination. These are then converted into a control input for each unit.

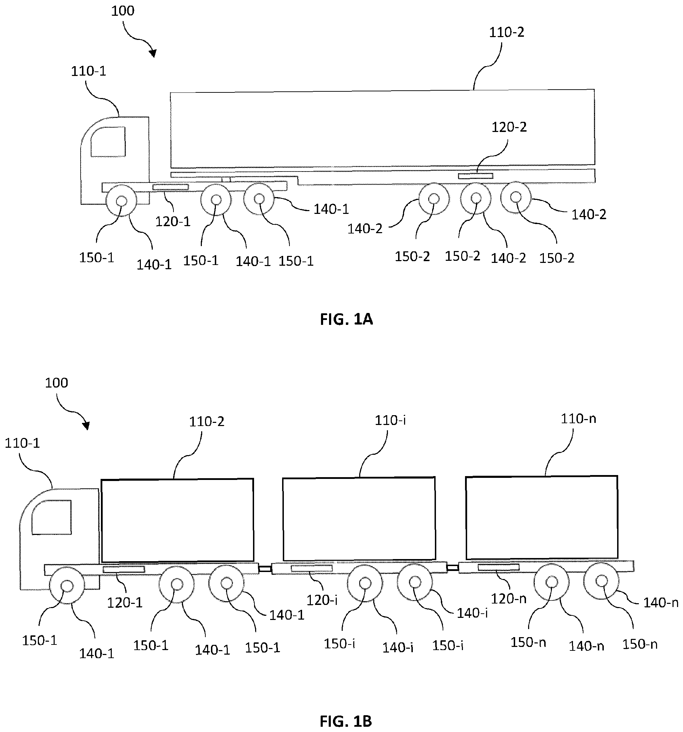

FIG. 1A schematically shows an example vehicle combination 100 of the type considered in this disclosure. The vehicle combination 100 comprises a number of units 110, including a tractor unit and at least one trailing unit. Only one trailing unit is shown, but it will be appreciated that the vehicle combination 100 may comprise further trailing units connected to each other. This gives rise to different types and designations of vehicle combinations.

A tractor unit, such as the tractor unit 110-1, is generally the foremost unit in a vehicle combination, and may comprise the cabin for the driver, including steering controls, dashboard displays and the like. Generally, the tractor unit 110-1 is used to provide propulsion power for the vehicle combination 100. A trailing unit, such as the trailing unit 110-2, is generally used to store goods that are being transported by the vehicle combination 100. A trailing unit may be a truck, trailer, dolly and the like. A trailing unit may also provide propulsion to the vehicle combination 100. A trailing unit without a front axle, such as the trailing unit 110-2, is known as a semi-trailer. In vehicle combinations such as that shown in FIG. 1A, vehicle motion management is available on a unit level to receive requests from a manual or virtual driver to coordinate the propulsion, braking and steering.

Each unit 110 may comprise one or more batteries 120 configured to provide power to one or more electrical machines 130 (not shown) such as electric motors. The electrical machines 130 are configured to drive, e.g. provide torque and/or steering to, one or more axles or individual wheels 140 of the unit 110. In some examples, electric motors may also be operated as generators, in order for the electric motors to generate braking force when required. Furthermore, each unit 110 may comprise one or more sets of service brakes 150. As shown in FIG. 1A, the tractor unit 110-1 has one or more batteries 120-1, wheels 140-1, and one or more sets of service brakes 150-1. The trailing unit 110-2 has one or more batteries 120-2, wheels 140-2, and one or more sets of service brakes 150-2.

Whilst three tractor axles and three trailer axles are shown, it will be appreciated that any suitable number of axles may be provide on the respective units 110. It will also be appreciated that any number of the tractor axles and/or trailer axles may be driven axles, including zero (i.e. one of the units may include at least one driven axle while the other does not).

FIG. 1B schematically shows another example vehicle combination 100 of the type considered in this disclosure. Similarly to the vehicle combination 100 of FIG. 1A, the vehicle combination 100 of FIG. 1B comprises a number of units 110, including a tractor unit and at least one trailing unit. Each unit 110 may be given an index $i$, and the total number of units in a vehicle combination is designated $n$.

The tractor unit 110-1 is generally the same as the tractor unit 110-1 of FIG. 1A. In this example, however, the tractor unit 110-1 may also be used to store goods that are being transported by the vehicle combination 100. The trailing units may be a truck, trailer, dolly and the like. All units 110 may provide propulsion to the vehicle combination 100.

Each unit 110 may comprise one or more batteries 120 configured to provide power to one or more electrical machines 130 (not shown) such as electric motors. Each unit 110 may comprise one or more sets of service brakes 150. As shown in FIG. 1B, the tractor unit 110-1 has one or more batteries 120-1, wheels 140-1, and one or more sets of service brakes 150-1. The unit 110-i has one or more batteries 120-i, wheels 140-i, and one or more sets of service brakes 150-i. The unit 110-n has one or more batteries 120-n, wheels 140-n, and one or more sets of service brakes 150-n. Whilst three tractor axles and two trailer axles are shown, it will be appreciated that any suitable number of axles may be provide on the respective units 110. It will also be appreciated that any number of the tractor axles and/or trailer axles may be driven axles, including zero (i.e. one of the units may include at least one driven axle while the other does not).

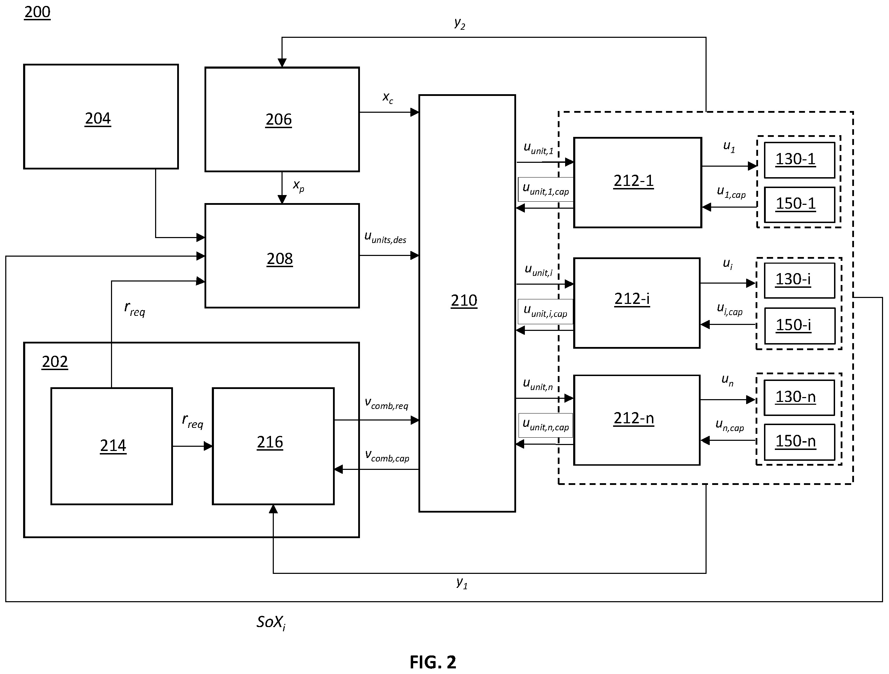

FIG. 2 schematically shows, in terms of functional blocks, an example control system 200 for a vehicle combination (e.g., any of the vehicle combinations 100 of Figures 1A and 1B). The control system 200 serves to perform various functions of the vehicle combination 100, such as power management and motion coordination. The control system 200 comprises a target generator 202, a tactical layer 204, a state estimator 206, a power manager 208, a combination control allocator 210 and a plurality of unit control allocators 212. The various modules may e.g. be implemented as code running on a processing circuitry, or similar. The various modules may be communicatively connected or connectable to each other, for example as known in the art.

The purpose of the target generator 202 is to determine a desired reference input $r_{req}$ and a virtual control input $v_{comb,req}$ for the vehicle combination 100. The desired reference input $r_{reg}$ is determined based on an input related to a manoeuvre for the vehicle combination 100. The virtual combination control input $v_{comb,req}$ is determined based on the desired reference input $r_{req}$ and a motion capability $v_{comb,cap}$ for the vehicle combination 100. The target generator 202 comprises a path planner/controller 214 and a force generator 216.

The target generator 202 may receive an input related to a manoeuvre for the vehicle combination 100. The manoeuvre may be, for example, straight-line driving, cornering, braking and the like. The target generator 202 may receive a signal from, for example, a steering wheel and/or gas/brake pedal of the combination unit 100, indicating that the driver (or some other system of the vehicle combination 100) wants to change the direction and/or the speed of the vehicle combination in a certain way. In some examples, the signal may originate from elsewhere, for example any other system that may provide some indication of how the overall forces of the vehicle combination 100 are to be influenced (e.g. steered, propelled or braked). For example, the signal may originate from a lane assist system, a lane following system, an emergency steering system, an emergency braking system, an automated or semi-automated drive system. Based on this input, the target generator 202 outputs a desired reference input $r_{req}$. In particular, the path planner/controller 214 determines the desired reference input $r_{req}$. The desired reference input $r_{req}$ may comprise at least one of a longitudinal acceleration $a_x$ of the vehicle combination 100 as a whole or of a unit 110 of the vehicle combination 100 (for example the unit 100 comprising the combination control allocator 210), a longitudinal velocity $v_{x1}$ of the tractor unit 110-1, a lateral velocity $v_{y1}$ of the tractor unit 110-1, a yaw rate $\omega_{zi}$ of at least one unit 110 of the vehicle combination 100, and a steering angle $\delta_{f,req}$ of the tractor unit 110-1.

The virtual combination control input $v_{comb,req}$ is determined based on the desired reference input $r_{req}$. In particular, the force generator 216 determines the virtual combination control input $v_{comb,req}$. The virtual combination control input $v_{comb,req}$ may include desired motion parameters for the vehicle combination 100. In particular, the forces and/or moments that need to be applied to the vehicle combination 100 as a whole in order to follow the desired reference input $r_{req}$ are determined. The desired motion parameters included in the combination virtual control input $v_{comb,req}$ of the vehicle combination 100 may comprise at least one of a longitudinal force $F_{xtot}$ of the vehicle combination 100, a lateral force $F_{ytot}$ of the vehicle combination 100, a longitudinal coupling force $F_{cxi}$ between consecutive units 110, a lateral coupling force $F_{cyi}$ between consecutive units 110, and/or a yaw moment $M_{zi}$ for one or more units 110.

The virtual combination control input $v_{comb,req}$ may also be determined based on state information $y_1$ from the different units 110 of the vehicle combination 100 and a motion capability $v_{comb,cap}$ for the vehicle combination 100. The state information $y_1$ may include information from sensors of the vehicle combination 100 such as wheel speed sensors, inertial measurement units, articulation angle sensors and the like. The motion capability $v_{comb,cap}$ of the vehicle combination 100 may describe the limits of motion parameters for safe operation of the vehicle combination 100. The motion capability $v_{comb,cap}$ may comprise at least one of a longitudinal force $F_{xtot,cap}$ of the vehicle combination 100, a lateral force $F_{ytot,cap}$ of the vehicle combination 100, and a yaw moment $M_{zi,cap}$ for one or more units 110.

The virtual combination control input $v_{comb,req}$ may be determined based on a vehicle model. The vehicle model can be any suitable model, for example a model known in the art. The model can be based on real tests, computer model simulations, a machine-learning model, or other suitable means known in the art. The vehicle model may provide motion prediction of the vehicle combination 100 by looking at previous steering input and acceleration input. The prediction may include instabilities such as understeer or rollover risk, for example within a one second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination.

The tactical layer 204 is responsible for ensuring that the trajectory for the whole combination 100 is obstacle free and collision free. The tactical layer 204 may also include predictive energy management, including battery targets, capabilities and statuses that determine how the energy sources of the vehicle combination 100 should be used for a whole mission. The tactical layer 204 may also provide a desired reference input in an autonomous driving case.

The state estimator 206 is responsible for processing state information $y_2$ from the different units 110 of the vehicle combination 100. For example, the state estimator 206 may receive information from sensors of the vehicle combination 100 such as wheel speed sensors, inertial measurement units, articulation angle sensors and the like and use this information to determine states for the vehicle combination 100 and the various units. The state estimator 206 may then output unit-specific state information $x_p$ to the power manager 208 and unit-specific state information $x_c$ to the combination control allocator 210.

The power manager 208 determines a power split between the different units 110 of the vehicle combination 100. The power manager 208 may also determine a power split within each unit 110, meaning how the power demand is divided between the actuators (for example, the electrical machines 130, service brakes 150, and/or steering servo arrangements) of the unit 110. Inputs to the power manager 208 include the desired reference input $r_{req}$ from the target generator 202 and the statuses $SoX$ of the batteries 120 of the vehicle combination 100. The power manager 208 determines a power allocation and an associated power allocation input $u_{units,des}$, as will be explained below.

The control allocators 210, 212 determine how various actuators (for example, the electrical machines 130, service brakes 150, and/or steering servo arrangements) of the vehicle combination 100 are to be controlled in order to generate requested global forces of the vehicle combination 100 as a whole. The combination control allocator 210 and the various unit specific control allocators 212 together form a distributed control allocation system for the vehicle combination 100. In this system, the control allocation is performed on multiple levels, i.e. first on a level of the vehicle combination 100 as a whole, and then on a level of each vehicle unit 110 individually.

The combination control allocator 210 transforms the virtual combination control input $v_{comb,req}$ from the target generator 202 into a true control input $u_{units}$ for the vehicle combination 100, describing appropriate motion parameters for each unit 110. The combination control allocator 210 also transforms the true combination control input $u_{units}$ into unit-specific virtual control inputs $u_{unit,i}$ describing the forces that each respective unit 110 is to produce in order to provide the true control input $u_{units}$ of the vehicle combination 100.

The unit control allocators 212 comprise a specific control allocator 212 for each unit 110 of the vehicle combination 100. The unit-specific virtual control inputs $u_{unit,i}$ that are output from the combination control allocator 210 are distributed into unit-specific true control inputs $u_i$, describing actual actuator commands by the unit specific control allocators 212. For example, the unit specific control allocators 212 map the forces and moments of each unit 110 into the steering and drive/brake torques to be applied at the wheels 140 of each unit 110.

**In** some examples, the actuators of a particular unit 110 may be capable of estimating their own capabilities $u_{unit,i,cap}$, e.g. how much and/or how fast the actuators can move at a current time instant. For example, as shown in FIG. 2, the actuators of each unit 110 may provide an actuator capability $u_{i,cap}$ to the respective unit control allocator 212-i, which provides a force capability $u_{unit,i,cap}$ to the combination control allocator 210.

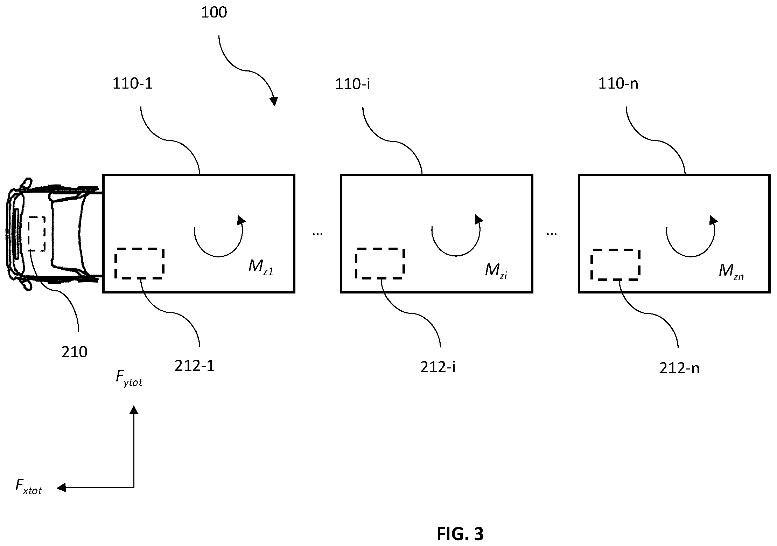

FIG. 3 schematically illustrates a top-view of an example of a vehicle combination 100 according to the present disclosure, including the requested global forces of the vehicle combination 100 as a whole. Examples of requested global forces of the vehicle combination 100 as a whole may e.g. include a total longitudinal/axial force $F_{xtot}$ a total lateral/radial force $F_{ytot}$, and/or one or more yaw moments $M_{zi}$ for the respective vehicle units 110.

The vehicle combination 100 includes a combination control allocator 210 and a plurality of unit control allocators 212. The combination control allocator 210 may be provided (as shown) as part of the tractor unit 110-1, while the unit control allocators 212 are provided as part of each individual unit 110. The combination control allocator 210 and the various unit specific control allocators 212 together form a distributed control allocation system for the vehicle combination 100, as discussed above. It will be appreciated that the combination control allocator 210 may be provided as part of any unit 110 of the vehicle combination 100.

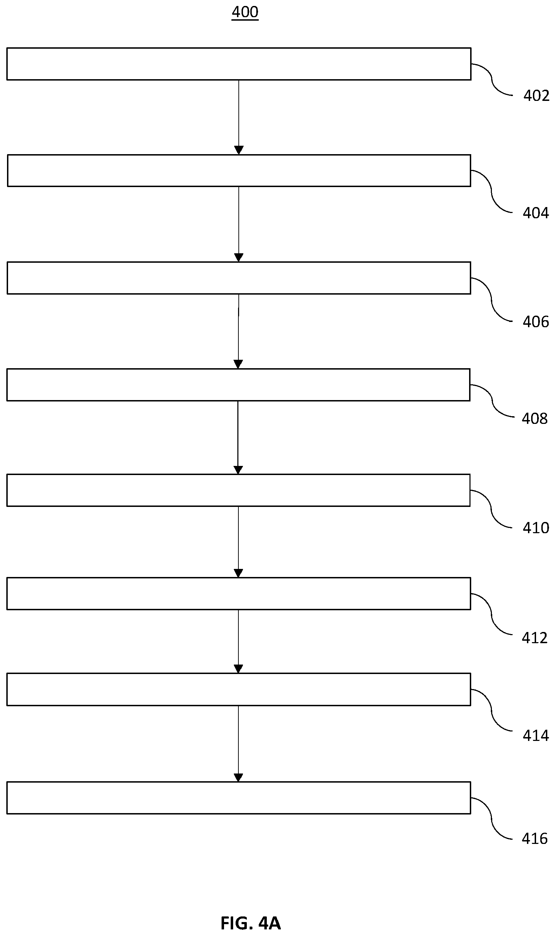

FIG. 4A is a flowchart of an example method 400 for controlling a vehicle combination 100. The method 400 may be performed by the control system 200 of a vehicle combination 100.

At step 402, a desired reference input $r_{req}$ for the vehicle combination 100 may be determined. As discussed above, the desired reference input may be determined in the target generator 202 of the control system based on an input from a driver or any other system that may provide some indication of how the overall forces of the vehicle combination 100 are to be influenced.

The desired reference input $r_{req}$ may comprise at least one of a longitudinal acceleration $a_x$ of the vehicle combination 100 as a whole or of a unit 110 of the vehicle combination 100 (for example the unit 100 comprising the combination control allocator 210), a longitudinal velocity $v_{x1}$ of the tractor unit 110-1, a lateral velocity $v_{y1}$ of the tractor unit 110-1, a yaw rate $\omega_{zi}$ of at least one unit 110 of the vehicle combination 100, and a steering angle $\delta_{f,req}$ of the tractor unit 110-1. The desired reference input $r_{req}$ may be a vector formulated in one of the following ways:

$$r_{req} = \left[ v_{x1}, v_{y1}\ \omega_{z1}, \omega_{z2}, ..., \omega_{zn} \right] \qquad (1)$$

$$r_{req} = \begin{bmatrix} a_{x,req} \\ \delta_{f,req} \end{bmatrix} \qquad (2)$$

$$r_{req} = \begin{bmatrix} a_{x,req} \\ \rho_{f,req} \end{bmatrix} \qquad (3)$$

where $\delta_{f,req}$ is a driver steering input and $\rho_{f,req}$ is the path curvature.

At step 404, a power capability of one or more batteries 120, for example a power capability of each battery 120, may be received. The power capability may be defined by a battery status $SoX_i$ of each battery 120. The battery statuses $SoX_i$ may be provided to the power manager 208 from each unit 110. The battery statuses may include the state of charge (SoC), state of health (SoH), state of power (SoP), and/or state of energy (SoE) of each battery 120. In particular, the battery statuses $SoX_i$ may include current values for the SoC, SoH, SoP, and/or SoE of each battery 120. The battery statuses $SoX_i$ may also include minimum and maximum values for the SoC, SoH, SoP, and/or SoE of each battery 120. The battery statuses $SoX_i$ may also include an SoC rate of change and/or an SoP input/output capability of each battery 120.

At step 406, a power allocation input $u_{units,des}$ is determined. The power allocation input $u_{units,des}$ is a set of desired motion parameters that satisfies a power allocation for the vehicle combination 100. The power allocation input $u_{units,des}$ may be formulated as follows:

$$u_{units,des} = \left[ u_{F_{x,des}}, u_{F_{y,des}}, u_{M_{z,des}} \right] \qquad (4)$$

$$u_{F_{x,des}} = \left[ F_{x,el1,des}, F_{x,sb1,des}, F_{x,el2,des}, F_{x,sb2,des}, \dots, F_{x,eln,des}, F_{x,sbn,des} \right] \qquad (5)$$

$$u_{F_{y,des}} = \left[ u_{F_{y1,des}}, u_{F_{y2,des}}, \dots, u_{F_{yn,des}} \right] \qquad (6)$$

$$u_{M_{z,des}} = \left[ u_{M_{z1,des}}, u_{M_{z2,des}}, \dots, u_{M_{zn,des}} \right] \qquad (7)$$

where $F_{x,eli,des}$ is the desired aggregate electric machine force for unit $i$, $F_{x,sbi,des}$ is the desired aggregate electric service brake force for unit $i$, $u_{F_{yi,des}}$ is the desired force for actuators that generate lateral force, and $u_{M_{z1,des}}$ is the desired force for actuators that generate yaw moment.

As mentioned above, the power allocation input $u_{units,des}$ is a set of desired motion parameters that satisfies a power allocation for the vehicle combination 100. The power allocation that is used to determine the power allocation input $u_{units,des}$ is the distribution of a power demand across the units 110 of the vehicle combination 100. The power allocation is determined by the power manager 208. The power allocation is determined based on the desired reference input $r_{req}$ and the power capability of one or more units 110, for example each unit 110. In some examples, a power flow model is used by the power manager 208 to determine the power allocation. The power flow model includes the power demands, supplies and losses for entire vehicle combination. In some examples, the unit-specific state information $x_p$ may be used with the power flow model 500.

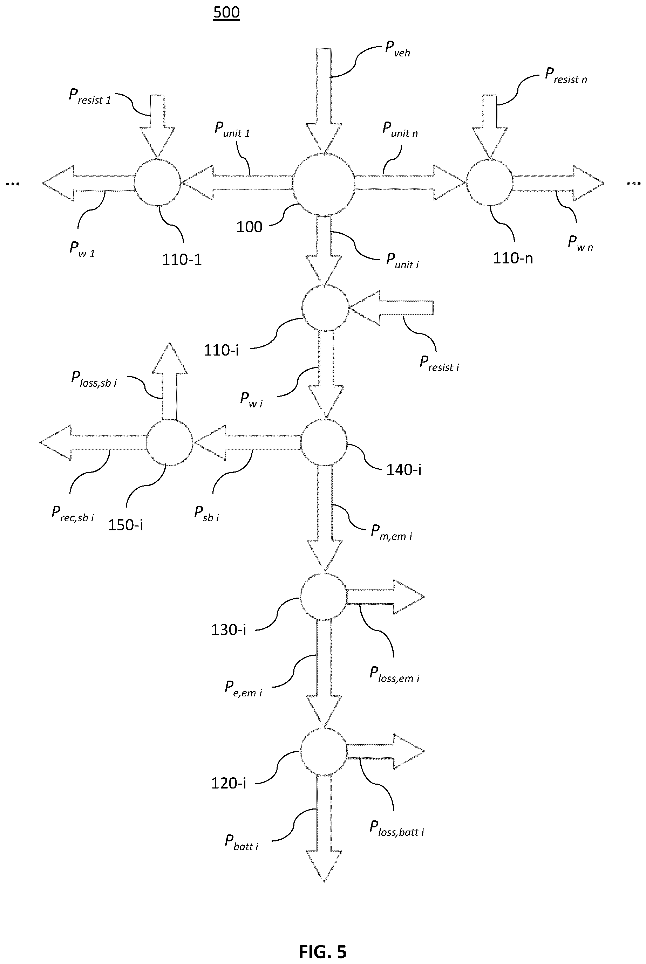

FIG. 5 shows an example power flow model 500. The power flow model 500 divides the total power demand $P_{veh}$ required for the vehicle combination 100 to perform a certain manoeuvre across the various units 110. The power demand $P_{veh}$ may be determined by multiplying the overall desired force by the current velocity of the vehicle combination 100. The power demand $P_{unit\,i}$ for a unit 110-i is split into the power $P_{w\,i}$ to be delivered at the wheels 140-i of the unit 110-i and the power loss $P_{resist\,i}$ due to resistive forces such as air resistance, friction, and the like. The power $P_{w\,i}$ to be delivered at the wheels 140-i of each unit 110-i is split into the mechanical power $P_{m,em\,i}$ delivered by the electrical machines 130-i and the power $P_{sb\,i}$ delivered by the service brakes 150-i during regenerative braking. The power $P_{m,em\,i}$ delivered by the electrical machines 130-i of each unit 110-i is split into the electrical power $P_{e,em\,i}$ delivered from the batteries 120-i, and power losses $P_{loss,em\,i}$ from the electrical machines 130-i, including the transmission. The power $P_{sb\,i}$ delivered by the service brakes 150-i of each unit 110-i is split into the thermal recovery power $P_{rec,sb\,i}$ from the service brakes 150-i, and power losses $P_{loss,sb\,i}$ from the service brakes 150-i. The thermal recovery power $P_{rec,sb\,i}$ from the service brakes 150-i is a result of regenerative braking, where the kinetic energy of a braking vehicle that would otherwise be lost as heat is converted into a useful form. In current systems, the thermal recovery power $P_{rec,sb\,i}$ from the service brakes 150-i is often zero. The electrical power $P_{e,em\,i}$ delivered from the batteries 120-i of each unit 110-i is split into the actual power $P_{batt\,i}$ delivered from the batteries 120-i and power losses $P_{loss,batt\,i}$ from the batteries 120-i including any converter. The actual power $P_{batt\,i}$ may be comprised of two components: a power $P_{batt\,i\,P>0}$ delivered from the batteries 120-i during propulsion, and a power $P_{batt\,i\,P<0}$ recovered by the batteries 120-i during regenerative braking.

The power flow model 500 can be used as a basis for determining a power allocation for the vehicle combination 100. In particular, given the total power demand $P_{veh}$ for the vehicle combination 100, a power allocation across the various units 110 can be determined that can be optimised in a certain way.

In one example, the power allocation can be determined such that the total power losses of the vehicle combination 100 are below a threshold, for example minimised. For example, an acceptable value for the total power losses of the vehicle combination 100 can be determined and implemented as an upper limit for the power losses. The power allocation can then be determined such that the total power losses of the vehicle combination 100 are below that value. That is to say, the power allocation can be determined such that the total power losses from the batteries 120, the electrical machines 130, and the service brakes 150 are below a threshold, for example minimised. In some examples, only the power losses from the service brakes 150 may be considered. In some examples, the power losses from the service brakes 150 may be considered along with the power losses from the batteries 120 and/or the power losses from the electrical machines 130.

In another example, the power allocation can be determined such that the total power delivered from the batteries is below a threshold, for example minimised. For example, an acceptable value for the total power delivered from the batteries 120 of the vehicle combination 100 can be determined and implemented as an upper limit for the power delivery. The power allocation can then be determined such that the total power delivered from the batteries 120 of the vehicle combination 100 is below that value. This may be achieved by reducing the power $P_{batt\,i\,P>0}$ delivered from the battery during propulsion, and increasing the total power $P_{batt\,i\,P<0}$ recovered by the battery during regenerative braking.

In each example, this may be achieved using an optimisation function to model different power allocations and determine which minimises the function. The optimisation functions may also be used to minimise the difference between the current SoC of the batteries and a target value, and to minimise the difference between the power delivered from the batteries and a target value.

A more detailed description of the power flow model 500 and its use for determining a power allocation for the vehicle combination 100 is disclosed in co-pending PCT patent applications PCT/EP2022/082326 and PCT/EP2022/082327, which were filed in the name of the same applicant (Volvo Truck Corporation) and on the same date (17 November 2022) as this patent application.

Returning to FIG. 4A, at step 408, a motion capability $v_{comb,cap}$ of the vehicle combination 100 may be determined. The motion capability $v_{comb,cap}$ describes the forces and/or moments that the vehicle combination 100 is capable of experiencing. This can be, for example, physical limits of the vehicle combination 100, such as an actuator capability, or limits that ensure that the vehicle combination 100 operates in a safe manner, for example related to a road friction. The motion capability $v_{comb,cap}$ may be received by the target generator 202 from the combination control allocator 210, which can determine a safe operating envelope for the vehicle combination 100 in different driving situations.

The motion capability $v_{comb,cap}$ of the vehicle combination 100 may comprise at least one of a longitudinal force $F_{xtot,cap}$ of the vehicle combination 100, a lateral force $F_{ytot,cap}$ of the vehicle combination 100, and a yaw moment $M_{zi,cap}$ for one or more units 110. The motion capability $v_{comb,cap}$ may be a vector formulated as follows:

$$v_{comb,cap} = \begin{bmatrix} F_{xtot,cap}, F_{ytot,cap}, M_{z1,cap}, M_{z2,cap}, \dots, M_{zn,cap} \end{bmatrix} \quad (8)$$

At step 410, a virtual combination control input $v_{comb,req}$ of the vehicle combination 100 is determined. The virtual combination control input $v_{comb,req}$ is determined by the target generator 202, in particular by the force generator 216. The virtual combination control input $v_{comb,req}$ is determined based on the desired reference input $r_{req}$. In particular, the forces and/or moments that need to be applied to the vehicle combination 100 as a whole in order to follow the desired reference input $r_{req}$ are determined. The motion capability $v_{comb,cap}$ of the vehicle combination 100 may also be taken into account to ensure that the virtual combination control input $v_{comb,req}$ does not exceed the operating limits of the vehicle combination 100. In some examples, the state information $y_1$ from the different units 110 of the vehicle combination 100 may also be taken into account.

The desired motion parameters included in the combination virtual control input $v_{comb,req}$ of the vehicle combination 100 may comprise at least one of a longitudinal force $F_{xtot}$ of the vehicle combination 100, a lateral force $F_{ytot}$ of the vehicle combination 100, a longitudinal coupling force $F_{cxi}$ between consecutive units 110, a lateral coupling force $F_{cyi}$ between consecutive units 110, and/or a yaw moment $M_{zi}$ for one or more units 110.

The virtual combination control input $v_{comb,req}$ may be a vector formulated as follows:

$$v_{comb,req} = \begin{bmatrix} F_{xtot}, F_{ytot}, M_{z1}, M_{z2}, \dots, M_{zn}, F_c \end{bmatrix} \quad (9)$$

The coupling force $F_c$ between consecutive units 110 may comprise a longitudinal coupling force $F_{cxi}$ between the consecutive units 110 and a lateral coupling force $F_{cyi}$ between the consecutive units 110. The coupling force $F_c$ between each unit 110 may be a vector formulated as follows:

$$F_c = \begin{bmatrix} F_{cx1}, F_{cy1}, F_{cx2}, F_{cy2}, \dots, F_{cx,n-1}, F_{cy,n-1} \end{bmatrix} \quad (10)$$

where $\underline{F_c} \leq F_c \leq \overline{F_c}$ are constraints on coupling forces for safe driving and manoeuvring. The coordinate system for the global forces is the coordinate system for the first unit 110-1 in forward motion and the last unit 110-n in the reversing motion. The coordinate system for the coupling forces is the coordinate system for the first unit of each coupling point.

The virtual combination control input $v_{comb,req}$ may be determined based on a vehicle model. The vehicle model can be any suitable model known in the art. The model can be based on real tests, computer model simulations, a machine-learning model, or other suitable means known in the art. The vehicle model may provide motion prediction of the vehicle combination 100 by looking at previous steering input and acceleration input. The prediction may include instabilities such as understeer or rollover risk, for example within a one second horizon. The model may be, for example, a single-track model, i.e., left and right wheels on a given axle are considered together. The real units can have axle groups with several axles, but in the model they are considered together. A tyre model can be used in combination with the vehicle model. The tyre model may take into account the cornering stiffness of the tyres of the vehicle combination.

At step 412, a true control input $u_{units}$ for the vehicle combination 100 is determined. The true combination control input $u_{units}$ contains data indicative of the forces that the respective units 110 are to produce in order for the generated forces to meet the desired motion parameters of the power allocation input $u_{units,des}$ and the virtual combination control input $v_{comb,req}$. Generally, for $n$ units 110, the true combination control input $u_{units}$ provided from the combination control allocator 210 may be formulated as:

$$u_{units} = \left[ F_{x,1}, F_{y,1}\ M_{z1}, \ldots, F_{x,n}, F_{y,n}, M_{z,n} \right] \qquad (11)$$

The true combination control input $u_{units}$ is determined by the combination control allocator 210. The true combination control input $u_{units}$ is determined based on the power allocation input $u_{units,des}$ and the virtual combination control input $v_{comb,req}$. In particular, the combination control allocator 210 solves a control allocation problem in order to find a particular control input $u_{units}$ that satisfies the received power allocation input $u_{units,des}$ and the virtual combination control input $v_{comb,req}$.

The combination control allocator 210 may solve a weighted least squares optimization problem as follows:

$$u_{units} = \underset{\underline{u_{units}} \leq u_{units} \leq \overline{u_{units}}}{\arg\min} \left( \left\| W_u \left( u_{units,des} - u_{units} \right) \right\|^2 \right.$$
$$\left. + \gamma \left\| W_v ( B_{comb} u_{units} - v_{comb,req} ) \right\|^2 \right) \qquad (12)$$

where $W_u$ and $W_v$ are (positive definite) weighting matrices, $\gamma$ is a weighting factor, $B_{comb}$ is a control efficiency matrix, and $\underline{u_{units}}$ and $\overline{u_{units}}$ are lower and upper capabilities of the various actuators, all defined and used as conventionally done in control allocation theory. The weighting factor $\gamma$ provides a trade-off between the power allocation term $\|W_u(u_{units,des} - u_{units})\|^2$ and the virtual control term $\|W_v(B_{comb}u_{units} - v_{comb,req})\|^2$. When $\gamma \rightarrow \infty$, the solution of the weighted least squares problem of equation (12) approaches that of a sequential least squares problem. In some examples, the unit-specific state information $x_c$ may be used as part of equality and inequality constraints used to solve the optimization problem in equation (12).

In equation (12), the following may apply:

$$v_{comb,req} \in R^k, u_{units} \in R^m, B_{comb} \in R^{k \times m}, m \geq k, m = 4n \qquad (13)$$

where $m$ is the number of torque-producing actuators of a unit and $k$ is the number of steering-actuators of a unit.

As the actuators generate torque rather than linear forces, the combination control allocator 210 may convert the true combination control input $u_{units}$ into actual steering commands for the actuators. For example, by knowing e.g. a radius of a wheel 140, the longitudinal force generated by such a wheel 140 is proportional to a torque applied to the wheel 140 divided by the radius. By having knowledge of the radius of a wheel 140, along with other factors, such as road friction, losses due to transmission, differentials, and the like, a control input in the form of a force to be generated by an actuator (i.e. a longitudinal force generated by a wheel 140 driven over a particular surface) can be translated into a required torque that needs to be applied on the wheel 140 to generate such a longitudinal force.

As such, for $n$ units 110, the true combination control input $u_{units}$ provided from the combination control allocator 210 may also be formulated as:

$$u_{units} = \left[ T_{1,1}, \ldots, T_{1,M_1}, \ldots, T_{N,1}, \ldots, T_{N,M_N}, \delta_{1,1}, \ldots, \delta_{1,K_1}, \ldots, \delta_{N,1}, \ldots, \delta_{N,K_N} \right] \qquad (14)$$

where $T_{i,m}$ is a torque to be generated by the $m$'th actuator of the $i$'th unit, $\delta_{i,k}$ is a steering angle to be applied to the $k$'th steering-actuator of the $i$'th unit, and where $M_i$ is the number of torque-producing actuators of the $i$'th unit and $K_i$ is the number of steering-actuators of the $i$'th unit.

At step 414, a unit-specific virtual control input $u_{unit,i}$ is determined for one or more units 110, for example each unit 110, of the vehicle combination 100. The unit-specific virtual control inputs $u_{unit,i}$ are determined by the combination control allocator 210. The unit-specific virtual control inputs $n_{unit,i}$ are provided to each respective unit control allocator 212 such that each particular unit control allocator 212-i receives only its own particular unit-specific virtual control input $u_{unit,i}$. Each unit control allocator 212-i thus receives control input information pertinent only to itself and its associated unit 110-i, and is thus not concerned with any control input information provided to any other unit control allocator. The determination of a unit-specific virtual control inputs is described in more detail in co-pending PCT patent application PCT/EP2022/065415, which was filed on 7 June 2022.

The unit-specific virtual control inputs $u_{unit,i}$ contain data indicative of the forces that each respective unit 110 is to produce in order to provide the true control input $u_{units}$ of the vehicle combination 100. Generally, for a unit $i$, the unit-specific virtual control input $u_{unit,i}$ provided from the combination control allocator 210 may be formulated as:

$$u_{unit,i} = \left[ F_{x,eli,req}, F_{x,sbi,req}, F_{yi,req}, M_{zi,req} \right] \qquad (15)$$

The unit-specific virtual control input $n_{unit,i}$ may also be converted into actual steering commands for the actuators, as discussed above.

At step 416, one or more unit control allocators 212 then performs control allocation on a unit level, in order to calculate a unit-specific true control input $u_i$ for its associated unit 110-i. This is achieved by the unit control allocator 212-i attempting to solve a unit-specific control allocation problem based on the received unit-specific virtual control input $u_{unit,i}$. This unit-specific control allocation problem can be defined as a weighed least squares optimization problem as follows:

$$u_i = \underset{\underline{u_i} \le u_i \le \overline{u_i}}{\mathrm{argmin}} (\left\| W_{ui} \left( u_i - u_{units,des} \right) \right\|^2 + \gamma_i \left\| W_{vi} (B_i u_i - u_{unit,i}) \right\|^2) \qquad (16)$$

where $W_{ui}$ and $W_{vi}$ are unit-specific (positive definite) weighting matrices, $\gamma_i$ is a unit-specific weighting factor, $B_i$ is a unit-specific control efficiency matrix, and $\underline{u_i}$ and $\overline{u_i}$ are lower and upper unit-specific capabilities of the various actuators, all defined and used as conventionally done in control allocation theory.

After having solved their own unit-specific control allocation problem as defined in equation (16), each unit control allocator 212-i can then obtain its own unit-specific true control input $u_i$ for its actuator(s), which can be formulated as:

$$u_i = \left[ T_{i,1}, \ldots, T_{1,M_i}, \delta_{i,1}, \ldots, \delta_{1,K_i} \right] \qquad (17)$$

where $T_{i,m}$ is a torque to be generated by the $m$ 'th torque-producing actuator of the $i$'th unit, $M_i$ is the number of torque-producing actuators of the $i$ 'th unit, $\delta_{i,k}$ is a steering angle to be applied to the $k$'th steering-actuator of the $i$ 'th unit, and where and $K_i$ is the number of steering-actuators of the $i$'th unit. If the unit-specific virtual control inputs $u_{unit,i}$ are provided as forces, the unit control allocators 212 may also perform the conversion into actual steering commands for the actuators to determine the unit-specific true control inputs $u_i$.

If a vehicle unit does not include any torque-generating actuators or steering-actuators, the corresponding torque and/or steering angle values in $u_i$ can then of course be omitted. As used herein, a "torque-generating actuator" means an actuator (such as an electric motor and/or a service brake) configured to apply torque on a wheel unit in order to use the wheel unit to either propel/accelerate or brake the vehicle. Likewise, a "steering-actuator" means an actuator (such as a steering servo arrangement or similar) which is configured to steer a wheel unit of the vehicle unit, where "steer" in this case means that the wheel unit has a steerable angle, and that the actuator is capable of changing this angle (e.g. by also applying torque to the wheel unit).

After having obtained their respective unit-specific true control input $u_i$, one or more unit control allocators 212-i may use the true control input $u_i$ to control the one or more actuators of the vehicle unit 110-i. As used herein, "controlling" may include e.g. sending a suitable control signal to the one or more actuators, or e.g. sending a signal instruction to some other unit/device responsible for generating such control signals for the one or more actuators. For example, a driving/control circuit for a particular actuator may e.g. form part of the unit control allocator 212 associated with the vehicle unit 110 in which the particular actuator is included, or e.g. be provided as a separate part communicatively connected to the unit control allocator 212.

The method 400 provides control allocation for vehicle combinations that is adaptable to different configurations of the vehicle combination. By taking a global approach to the vehicle combination, rather than, approaching the problem on a unit level, the control allocation can take into account global factors for the vehicle combination such as power allocation.

In some examples, the actuators of a particular unit 110 may be capable of estimating their own capabilities $n_{unit,i,cap}$, e.g. how much and/or how fast the actuators can move at a current time instant. The capabilities of the actuators can change, for example, depending on how the vehicle combination 100 or unit 110 is currently loaded, a current road surface, friction and/or temperature conditions of e.g. the wheel units used to transfer the forces/moments of the actuators on to the ground on which the vehicle combination 100 or unit 110 is currently travelling, etc. The actuator capabilities $u_{unit,i,cap}$ of individual units can be aggregated into actuator capabilities $\underline{u_{units}}$ and $\overline{u_{units}}$ of the vehicle combination 100, which can form part of the motion capability $v_{comb,cap}$ for the vehicle combination 100.

For example, as shown in FIG. 2, the actuators of one or more units 110 may provide an actuator capability $u_{i,cap}$ to the respective unit control allocator 212-i, which provides a force capability $u_{unit,i,cap}$ to the combination control allocator 210. The actuators may update and send their capabilities in real time, such that the combination control allocator 210 has real-time information about the capabilities of its associated actuators.

As the actuators generate torque rather than linear forces, the capability $u_{i,cap}$ may be provided in term of steering parameters for the actuators. For example, for a unit 110-i, the actuator capability $u_{i,cap}$ may be formulated as:

$$u_{i,cap} = \left[T_{i,\mathrm{m}}, \delta_{i,k}\right] \qquad (18)$$

where $T_{i,m}$ is a torque to be generated by the *m 'th* actuator of the *i'th* unit, $\delta_{i,k}$ is a steering angle to be applied to the *k'th* steering-actuator of the *i'th* unit.

The unit control allocators 212 convert the received actuator capability $u_{i,cap}$ into a force capability $u_{unit,i,cap}$, for example in the inverse sense to the conversion from forces to actuator commands discussed above. As such, for a unit 110-i, the force capability $u_{unit,i,cap}$ may be formulated as:

$$u_{unit,i,cap} = \left[F_{x,eli,cap}, F_{x,sbi,cap}, F_{yti,cap}, M_{zti,cap}\right] \qquad (19)$$

where $F_{x,eli,cap}$ is the possible electric machine force, $F_{x,sbi,cap}$ is the possible service brake force, $F_{yti,cap}$ is the possible force from actuators that generate lateral force, and $M_{zti,cap}$ is the possible force from actuators that generate yaw moment. Alternatively, the conversion of the actuator capability $u_{i,cap}$ into a force capability $u_{unit,i,cap}$ can be performed by the combination control allocator 210.

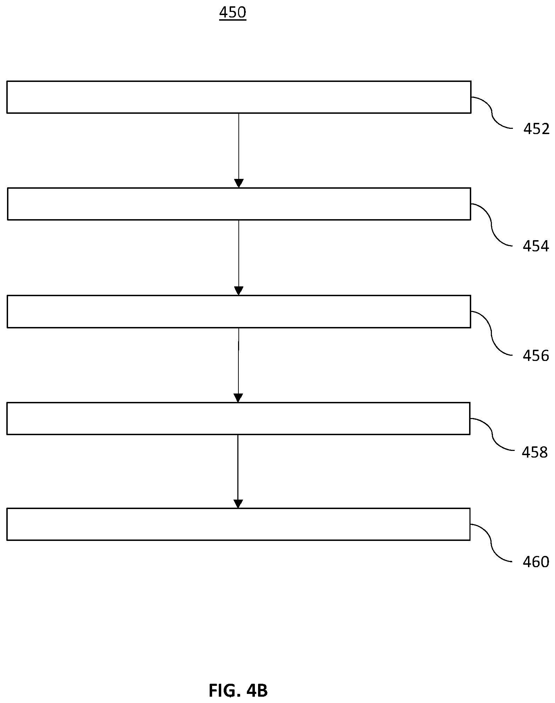

FIG. 4B is a flowchart of an example method 450 for controlling a vehicle combination 100. The method 450 may be performed by the combination control allocator 210 of a vehicle combination 100.

At step 452, the combination control allocator 210 receives a virtual combination control input $v_{comb,req}$. The virtual combination control input $v_{comb,req}$ may be received from the target generator 202, in particular the force generator 216. The virtual combination control input $v_{comb,req}$ is determined based on a desired reference input $r_{req}$, and optionally a motion capability $v_{comb,cap}$ of the vehicle combination 100.

At step 454, the combination control allocator 210 receives a power allocation input $u_{units,des}$ for the vehicle combination 100. The power allocation input $u_{units,des}$ may be received from the power manager 208.

At step 456, the combination control allocator 210 determines a control input for the vehicle combination 100 based on the virtual combination control input $v_{comb,req}$ and the power allocation input $u_{units,des}$. In particular, the combination control allocator 210 determines a true combination control input $u_{units}$ for the vehicle combination by solving solve a weighted least squares optimization problem as defined in equation (12).

At step 458, the combination control allocator 210 determines a unit-specific virtual control input $u_{unit,i}$ for one or more units of the vehicle combination.

At step 460, the combination control allocator 210 sends each unit-specific virtual control input $u_{unit,i}$ to a respective unit control allocator 212. Each unit control allocator 212 then performs control allocation on a unit level, in order to calculate a unit-specific true control input $u_i$ for its associated unit 110-i.

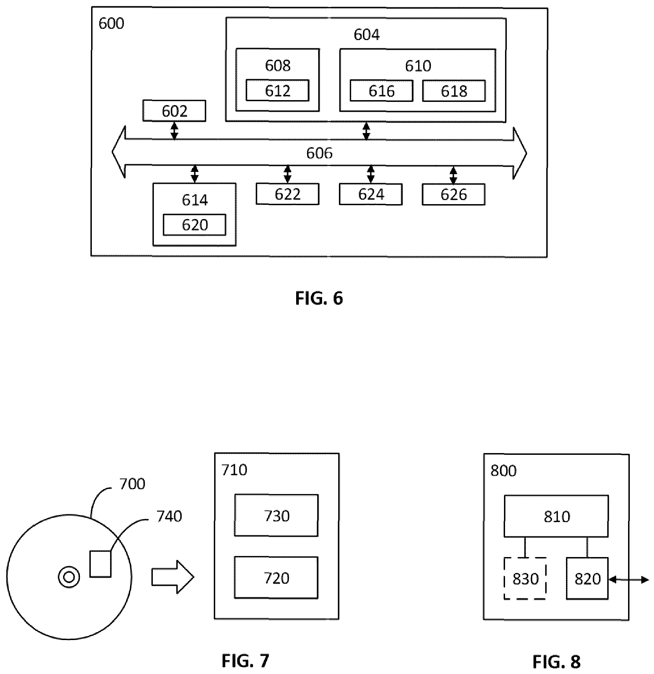

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). FIG. 7 illustrates an example computer readable medium in the form of a compact disc (CD) ROM 700. The computer readable medium has stored thereon a computer program 740 comprising program instructions. The computer program is loadable into a data processor (e.g., a data processing unit) 720, which may, for example, be comprised in a vehicle control unit 710. When loaded into the data processor, the computer program may be stored in a memory 730 associated with, or comprised in, the data processor. According to some examples, the computer program may, when loaded into, and run by, the data processor, cause execution of method steps according to, for example, any of the methods described herein.

FIG. 8 schematically illustrates, in terms of a number of functional units, the components of a control unit 800 according to some examples. The control unit may be comprised in a vehicle, e.g., in the form of a vehicle motion management (VMM) unit. A processor device in the form of processing circuitry 810 is provided using any combination of one or more of a suitable central processing unit (CPU), multiprocessor, microcontroller, digital signal processor (DSP), or similar; capable of executing software instructions stored in a computer program product, e.g. in the form of a storage medium 830. The processing circuitry 810 may further be provided as at least one application specific integrated circuit ASIC, or field programmable gate array FPGA.

Particularly, the processing circuitry 810 is configured to cause the control unit 800 to perform a set of operations, or steps; for example, any one or more of the methods discussed in connection to FIG. 4A and FIG. 4B.

For example, the storage medium 830 may store a set of operations, and the processing circuitry 810 may be configured to retrieve the set of operations from the storage medium 830 to cause the control unit 800 to perform the set of operations. The set of operations may be provided as a set of executable instructions. Thus, the processing circuitry 810 is thereby arranged to execute methods as herein disclosed.

The storage medium 830 may comprise persistent storage, which, for example, can be any single one or combination of magnetic memory, optical memory, solid state memory or even remotely mounted memory.

The control unit 800 may further comprise an interface 820 for communication with at least one external device. As such, the interface 820 may comprise one or more transmitters and receivers, comprising analogue and digital components and a suitable number of ports for wireline or wireless communication.

The processing circuitry 810 controls the general operation of the control unit 800, e.g., by sending data and control signals to the interface 820 and the storage medium 830, by receiving data and reports from the interface 820, and by retrieving data and instructions from the storage medium 830. Other components, as well as the related functionality, of the control node are omitted in order not to obscure the concepts presented herein.

In some examples, the control unit 800 may be seen as a control system, or may be comprised in a control system. The control system may be configured for vehicle motion management (VMM). In some examples, the control system is configured to individually control vehicle units and/or vehicle axles and/or wheels of a multi-unit combination vehicle via a dynamic model of the vehicle, which is based on a detected order among vehicle units and/or a detected order among wheel axles.

Generally herein, that one entity is "communicatively coupled" or "communicatively connected" to another entity means that the two entities are thus able to exchange information, e.g. by sending one or more signals between them. The sending of the signals can e.g. be performed using one or more wires/cables suitable therefore, or e.g., in addition or instead, by using one or more suitable wireless interfaces and communication techniques. The exact protocol used for such signalling between entities is not important, as long as the information needed for the entities to operate as intended may be exchanged in some way between them. It should be noted that the connection does not need to be direct, but may also be indirect.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the extent of protection being set forth in the following claims.

**Claims**

1. A computer-implemented method (400) for controlling a vehicle combination (100) comprising a tractor unit and at least one trailing unit, the method comprising:

   determining (406) a power allocation input, $u_{units,des}$, for the vehicle combination based on a reference input, $r_{ref}$, for the vehicle combination and a power capability of one or more units (110) of the vehicle combination such that the total power losses of the vehicle combination are below a threshold;
   determining (410) a virtual control input, $v_{comb,req}$, for the vehicle combination based on the reference input; and
   determining (412, 414, 416) a control input, $u_{units}$, $u_{units,i}$, $ui$, for the vehicle combination based on the power allocation input and the virtual control input.

2. The computer-implemented method (400) of claim 1, wherein the virtual combination control input, $v_{comb,req}$, comprises a set of desired motion parameters determined based the reference input, $r_{ref}$.

3. The computer-implemented method (400) of claim 2, wherein the set of desired motion parameters of the virtual combination control input, $v_{comb,req}$, comprises at least one of a longitudinal force, $F_{xtot}$, of the vehicle combination (100), a lateral force, $F_{ytot}$, of the vehicle combination, a longitudinal coupling force, $F_{cxi}$, between consecutive units (110), a lateral coupling force, $F_{cyi}$, between consecutive units, and a yaw moment for one or more units, $M_{zi}$.

4. The computer-implemented method (400) of any preceding claim, comprising determining (410) the virtual control input, $v_{comb,req}$, for the vehicle combination (100) based on a motion capability, $v_{comb,cap}$, of the vehicle combination.

5. The computer-implemented method (400) of any preceding claim, comprising determining (410) the virtual control input, $v_{comb,req}$, for the vehicle combination (100) based on a vehicle model configured to model instabilities in vehicle motion.

6. The computer-implemented method (400) of any preceding claim, wherein the reference input, $r_{ref}$, comprises at least one of a longitudinal acceleration, a longitudinal velocity, $v_{xi}$, of the tractor unit, a lateral velocity, $v_{yi}$, of the tractor unit, a yaw rate, $\omega_{zi}$, of at least one unit (110) of the vehicle combination (100), and a steering angle, $\delta_{f,req}$, of the tractor unit.

7. The computer-implemented method (400) of any preceding claim, wherein the power capability of a unit (110) is determined based on at least one of a state of charge, a state of health, a state of power, and a state of energy of a battery of the unit.

8. The computer-implemented method (400) of any preceding claim, wherein the power allocation input, $u_{units,des}$, comprises a set of desired motion parameters determined based on a power allocation for one or more units (110).

9. The computer-implemented method (400) of claim 8, wherein the set of desired motion parameters of the power allocation input, $u_{units,des}$, comprises at least one of a desired electric machine force, $F_{x,eli,des}$, for one or more units and a desired electric service brake, $F_{x,sbi,des}$, force for one or more units (110).

10. The computer-implemented method (400) of claim 8 or 9, comprising determining (406) the power allocation for a unit (110) based on a power demand and at least one of a power loss associated with service brakes (150) of the unit, a power loss associated with a battery (120) of the unit, and a power loss associated with an electrical machine (120) of the unit.

11. The computer-implemented method (400) of claim 10, comprising determining (406) the power allocation for one or more units (110) using an optimisation function to minimise the total power losses of the vehicle combination (100).

12. The computer-implemented method (400) of any preceding claim, comprising determining (412, 414, 416) a control input, $u_{units}$, $u_{units,i}$, $ui$, for the vehicle combination (100) by:

determining (412) a true combination control input, $u_{units}$, based on the power allocation input, $u_{units,des}$, and the virtual combination control input, $v_{comb,req}$; and
determining (414) a unit-specific virtual control input, $u_{units,i}$, based on the true combination control input.

13. The computer-implemented method (400) of claim 12, comprising determining (412) the true combination control input, $u_{units}$, by solving a weighted least squares optimization problem.

14. The computer-implemented method (400) of claim 12 or 13, comprising determining (416) a unit-specific true control input, $u_i$, for a respective unit (110) of the vehicle combination (100) based on the unit-specific virtual control input, $u_{units,i}$.

15. The computer-implemented method (400) of claim 14, comprising determining (416) the unit-specific true control input, $u_i$, by solving a weighted least squares optimization problem.

16. A computer system comprising a processor device configured to perform the computer-implemented method (400) of any of claims 1 to 15.

17. A vehicle comprising the system of claim 16.


**Patentansprüche**

1. Computerimplementiertes Verfahren (400) zum Steuern einer Fahrzeugkombination (100), umfassend eine Zugmaschine und mindestens eine Anhängereinheit, das Verfahren umfassend:

Bestimmen (406) eines Leistungszuweisungseingangs, $u_{units,des}$, für die Fahrzeugkombination basierend auf einem Referenzeingang, $r_{ref}$, für die Fahrzeugkombination und einer Leistungsfähigkeit von einer oder mehreren Einheiten (110) der Fahrzeugkombination, sodass die Gesamtverluste der Fahrzeugkombination unter einem Schwellenwert sind;
Bestimmen (410) eines virtuellen Steuerungseingangs, $v_{comb,req}$, für die Fahrzeugkombination basierend auf dem Referenzeingang; und
Bestimmen (412, 414, 416) eines Steuerungseingangs, $u_{units}$, $u_{units,i}$, $u_i$, für die Fahrzeugkombination basierend auf dem Leistungszuweisungseingang und dem virtuellen Steuerungseingang.

2. Computerimplementiertes Verfahren (400) nach Anspruch 1, wobei der virtuelle Kombinationssteuerungseingang, $v_{comb,req}$, einen Satz gewünschter Bewegungsparameter umfasst, die basierend auf dem Referenzeingang, $r_{ref}$, bestimmt werden.

3. Computerimplementiertes Verfahren (400) nach Anspruch 2, wobei der Satz gewünschter Bewegungsparameter des virtuellen Kombinationssteuerungseingangs, $v_{comb,req}$, mindestens eines von einer Längskraft, $F_{xtot}$, der Fahrzeugkombination (100), eine Querkraft, $F_{ytot}$, der Fahrzeugkombination, eine Längskopplungskraft, $F_{cxi}$, zwischen aufeinanderfolgenden Einheiten (110), eine Querkopplungskraft, $F_{cyi}$, zwischen aufeinanderfolgenden Einheiten und ein Giermoment für eine oder mehrere Einheiten, $M_{zi}$ umfasst.

4. Computerimplementiertes Verfahren (400) nach einem der vorherigen Ansprüche, umfassend ein Bestimmen (410) des virtuellen Steuerungseingangs, $v_{comb,req}$, für die Fahrzeugkombination (100) basierend auf einer Bewegungsfähigkeit, $v_{comb,cap}$, der Fahrzeugkombination.

5. Computerimplementiertes Verfahren (400) nach einem der vorherigen Ansprüche, umfassend ein Bestimmen (410) des virtuellen Steuerungseingangs, $v_{comb,req}$, für die Fahrzeugkombination (100) basierend auf einem Fahrzeugmodell, das konfiguriert ist, um Instabilitäten in der Fahrzeugbewegung zu modellieren.

**6.** Computerimplementiertes Verfahren (400) nach einem der vorherigen Ansprüche, wobei der Referenzeingang, $r_{ref}$, mindestens eines von einer Längsbeschleunigung, einer Längsgeschwindigkeit, $v_{xi}$, der Zugmaschine, einer Quergeschwindigkeit, $v_{yi}$, der Zugmaschine, eine Gierrate, $\omega_{zi}$, mindestens einer Einheit (110) der Fahrzeugkombination (100) und einem Lenkwinkel, $\delta_{f,req}$, der Zugmaschine umfasst.

**7.** Computerimplementiertes Verfahren (400) nach einem der vorherigen Ansprüche, wobei die Leistungsfähigkeit einer Einheit (110) basierend auf mindestens einem von einem Ladezustand, einem Gesundheitszustand, einem Leistungszustand und einem Energiezustand einer Batterie der Einheit bestimmt wird.

**8.** Computerimplementiertes Verfahren (400) nach einem der vorherigen Ansprüche, wobei der Leistungszuweisungseingang, $u_{units,des}$, einen Satz gewünschter Bewegungsparameter umfasst, die basierend auf einer Leistungszuweisung für eine oder mehrere Einheiten (110) bestimmt werden.

**9.** Computerimplementiertes Verfahren (400) nach Anspruch 8, wobei der Satz von gewünschten Bewegungsparametern des Leistungszuweisungseingangs, $u_{units,des}$, mindestens eine gewünschte elektrische Maschinenkraft, $F_{x,eli,des}$, für eine oder mehrere Einheiten und eine gewünschte elektrische Betriebsbremskraft, $F_{x,sbi,des}$, für eine oder mehrere Einheiten (110) umfasst.

**10.** Computerimplementiertes Verfahren (400) nach Anspruch 8 oder 9, umfassend ein Bestimmen (406) der Leistungszuweisung für eine Einheit (110) basierend auf einem Leistungsbedarf und mindestens einer Verlustleistung in Verbindung mit Betriebsbremsen (150) der Einheit, einer Verlustleistung in Verbindung mit einer Batterie (120) der Einheit und einer Verlustleistung in Verbindung mit einer elektrischen Maschine (120) der Einheit.

**11.** Computerimplementiertes Verfahren (400) nach Anspruch 10, umfassend ein Bestimmen (406) der Leistungszuweisung für eine oder mehrere Einheiten (110) unter Verwendung einer Optimierungsfunktion, um die Gesamtleistungsverluste der Fahrzeugkombination (100) zu minimieren.

**12.** Computerimplementiertes Verfahren (400) nach einem der vorherigen Ansprüche, umfassend ein Bestimmen (412, 414, 416) eines Steuerungseingang, $u_{units}$, $u_{units,i}$, $u_i$, für die Fahrzeugkombination (100) durch:

Bestimmen (412) eines echten Kombinationssteuerungseingangs, $u_{units}$, basierend auf dem Leistungszuweisungseingang, $u_{units,des}$ und dem virtuellen Kombinationssteuerungseingang, $v_{comb,req}$, und
Bestimmen (414) eines einheitsspezifischen virtuellen Steuerungseingangs, $u_{units,i}$, basierend auf dem echten Kombinationssteuereingang.

**13.** Computerimplementiertes Verfahren (400) nach Anspruch 12, umfassend ein Bestimmen (412) des echten Kombinationssteuerungseingangs, $u_{units}$, durch Lösen eines gewichteten Optimierungsproblems der kleinsten Quadrate.

**14.** Computerimplementiertes Verfahren (400) nach Anspruch 12 oder 13, umfassend ein Bestimmen (416) eines einheitsspezifischen echten Steuerungseingangs, $u_i$, für eine jeweilige Einheit (110) der Fahrzeugkombination (100) basierend auf dem einheitsspezifischen virtuellen Steuerungseingang, $u_{units,i}$.

**15.** Computerimplementiertes Verfahren (400) nach Anspruch 14, umfassend ein Bestimmen (416) des einrichtungsspezifischen echten Steuerungseingangs, $u_i$, durch Lösen eines gewichteten Optimierungsproblems der kleinsten Quadrate.

**16.** Rechensystem, umfassend eine Prozessorvorrichtung, die konfiguriert ist, um das rechnerimplementierte Verfahren (400) nach einem der Ansprüche 1 bis 15 durchzuführen.

**17.** Fahrzeug, umfassend das System nach Anspruch 16.

**Revendications**

**1.** Procédé (400) mis en œuvre par ordinateur pour commander une combinaison de véhicules (100) comprenant une unité de tracteur et au moins une unité remorquée, le procédé comprenant :

la détermination (406) d'une entrée d'attribution de puissance, $u_{units,des}$, pour la combinaison de véhicules sur la

EP 4 536 525 B1

base d'une entrée de référence, $r_{ref}$, pour la combinaison de véhicules et d'une capacité de puissance d'une ou plusieurs unités (110) de la combinaison de véhicules de sorte que les pertes de puissance totales de la combinaison de véhicules soient inférieures à un seuil ;

la détermination (410) d'une entrée de commande virtuelle, $v_{comb,req}$, pour la combinaison de véhicules sur la base de l'entrée de référence ; et

la détermination (412, 414, 416) d'une entrée de commande, $u_{units}$, $u_{units,i}$, $u_i$, pour la combinaison de véhicules sur la base de l'entrée d'attribution de puissance et de l'entrée de commande virtuelle.

2. Procédé (400) mis en œuvre par ordinateur selon la revendication 1, dans lequel l'entrée de commande de combinaison virtuelle, $v_{comb,req}$, comprend un ensemble de paramètres de mouvement souhaités déterminés sur la base de l'entrée de référence, $r_{ref}$.

3. Procédé (400) mis en œuvre par ordinateur selon la revendication 2, dans lequel l'ensemble des paramètres de mouvement souhaités de l'entrée de commande de combinaison virtuelle, $v_{comb,req}$, comprend au moins l'un d'une force longitudinale, $F_{xtot}$, de la combinaison de véhicules (100), d'une force latérale, $F_{ytot}$, de la combinaison de véhicules, d'une force de couplage longitudinale, $F_{cxi}$, entre les unités consécutives (110), d'une force de couplage latérale, $F_{cyi}$, entre les unités consécutives, et d'un moment de lacet pour une ou plusieurs unités, $M_{zi}$.

4. Procédé (400) mis en œuvre par ordinateur selon l'une quelconque des revendications précédentes, comprenant la détermination (410) de l'entrée de commande virtuelle, $v_{comb,req}$, pour la combinaison de véhicules (100) sur la base d'une capacité de mouvement, $v_{comb,cap}$, de la combinaison de véhicules.

5. Procédé (400) mis en œuvre par ordinateur selon l'une quelconque des revendications précédentes, comprenant la détermination (410) de l'entrée de commande virtuelle, $v_{comb,req}$, pour la combinaison de véhicules (100) sur la base d'un modèle de véhicule configuré pour modéliser les instabilités dans le mouvement du véhicule.

6. Procédé (400) mis en œuvre par ordinateur selon l'une quelconque des revendications précédentes, dans lequel l'entrée de référence, $r_{ref}$, comprend au moins l'un d'une accélération longitudinale, d'une vitesse longitudinale, $v_{xi}$, de l'unité de tracteur, d'une vitesse latérale, $v_{yi}$, de l'unité de tracteur, d'une vitesse de lacet, $\omega_{zi}$, d'au moins une unité (110) de la combinaison de véhicules (100), et d'un angle de braquage, $\delta_{f,req}$, de l'unité de tracteur.

7. Procédé (400) mis en œuvre par ordinateur selon l'une quelconque des revendications précédentes, dans lequel la capacité de puissance d'une unité (110) est déterminée sur la base d'au moins l'un d'un état de charge, d'un état de santé, d'un état de puissance et d'un état d'énergie d'une batterie de l'unité.

8. Procédé (400) mis en œuvre par ordinateur selon l'une quelconque des revendications précédentes, dans lequel l'entrée d'attribution de puissance, $u_{units,des}$, comprend un ensemble de paramètres de mouvement souhaités déterminés sur la base d'une attribution de puissance pour une ou plusieurs unités (110).

9. Procédé (400) mis en œuvre par ordinateur selon la revendication 8, dans lequel l'ensemble des paramètres de mouvement souhaités de l'entrée d'attribution de puissance, $u_{units,des}$, comprend au moins l'une d'une force de machine électrique souhaitée, $F_{x,eli,des}$, pour une ou plusieurs unités et d'une force de frein de service électrique souhaitée, $F_{x,sbi,des}$, pour une ou plusieurs unités (110).

10. Procédé (400) mis en œuvre par ordinateur selon la revendication 8 ou 9, comprenant la détermination (406) de l'attribution de puissance pour une unité (110) sur la base d'une demande de puissance et d'au moins l'une d'une perte de puissance associée aux freins de service (150) de l'unité, d'une perte de puissance associée à une batterie (120) de l'unité, et d'une perte de puissance associée à une machine électrique (120) de l'unité.

11. Procédé (400) mis en œuvre par ordinateur selon la revendication 10, comprenant la détermination (406) de l'attribution de puissance pour une ou plusieurs unités (110) en utilisant une fonction d'optimisation pour minimiser les pertes de puissance totales de la combinaison de véhicules (100).

12. Procédé (400) mis en œuvre par ordinateur selon l'une quelconque des revendications précédentes, comprenant la détermination (412, 414, 416) d'une entrée de commande, $u_{units}$, $u_{units,i}$, $u_i$, pour la combinaison de véhicules (100) par :

la détermination (412) d'une entrée de commande de combinaison réelle, $u_{units}$, sur la base de l'entrée d'attribution de puissance, $u_{units,des}$, et de l'entrée de commande de combinaison virtuelle, $v_{comb,req}$, et la détermination (414) d'une entrée de commande virtuelle spécifique de l'unité, $u_{units,i}$, sur la base de l'entrée de commande de combinaison réelle.

13. Procédé (400) mis en œuvre par ordinateur selon la revendication 12, comprenant la détermination (412) de l'entrée de commande de combinaison réelle, $u_{units}$, par la résolution d'un problème d'optimisation des moindres carrés pondérés.

14. Procédé (400) mis en œuvre par ordinateur selon la revendication 12 ou 13, comprenant la détermination (416) d'une entrée de commande réelle spécifique de l'unité, $u_i$, pour une unité (110) respective de la combinaison de véhicules (100) sur la base de l'entrée de commande virtuelle spécifique de l'unité, $u_{units,i}$.

15. Procédé (400) mis en œuvre par ordinateur selon la revendication 14, comprenant la détermination (416) de l'entrée de commande réelle spécifique de l'unité, $u_i$, par la résolution d'un problème d'optimisation des moindres carrés pondérés.

16. Système informatique comprenant un dispositif de traitement configuré pour exécuter le procédé (400) mis en œuvre par ordinateur selon l'une quelconque des revendications 1 à 15.

17. Véhicule comprenant le système selon la revendication 16.

**FIG. 1A**

**FIG. 1B**

**FIG. 2**

FIG. 3

400

```
┌──────────────────────────────────┐
│                                  │── 402
└──────────────────────────────────┘
                 │
                 ▼
┌──────────────────────────────────┐
│                                  │── 404
└──────────────────────────────────┘
                 │
                 ▼
┌──────────────────────────────────┐
│                                  │── 406
└──────────────────────────────────┘
                 │
                 ▼
┌──────────────────────────────────┐
│                                  │── 408
└──────────────────────────────────┘
                 │
                 ▼
┌──────────────────────────────────┐
│                                  │── 410
└──────────────────────────────────┘
                 │
                 ▼
┌──────────────────────────────────┐
│                                  │── 412
└──────────────────────────────────┘
                 │
                 ▼
┌──────────────────────────────────┐
│                                  │── 414
└──────────────────────────────────┘
                 │
                 ▼
┌──────────────────────────────────┐
│                                  │── 416
└──────────────────────────────────┘
```

FIG. 4A

450

452

454

456

458

460

**FIG. 4B**

500

FIG. 5

**FIG. 6**

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20220097786 A1
- WO 2022106005 A1
- EP 2022082326 W
- EP 2022082327 W
- EP 2022065415 W

### Non-patent literature cited in the description

- Real-time Performance of Control Allocation for Actuator Coordination in Heavy Vehicles. **K TAGES-SON et al.** Intelligent Vehicles Symposium. IEEE, 03 June 2009